# FASCICULE DE BREVET EUROPEEN

(11) **EP 0 565 440 B1**
(45) Date de publication et mention de la délivrance du brevet: **16.12.1998**
(21) Numéro de dépôt: 93400900.2
(22) Date de dépôt: 06.04.1993
(51) Int. Cl.: C04B 28/06, C04B 35/66, C04B 35/76

(54) **Composition de bétons réfractaires**
Feuerfestbeton-Zusammensetzung
Refractory concrete composition

(30) Priorité: 10.04.1992 FR 9204454
(43) Date de publication de la demande: 13.10.1993
(73) Titulaire: SOCIETE DES TERRES REFRACTAIRES DU BOULONNAIS, F-62152 Neufchatel-Hardelot (FR); WAHL REFRACTORIES, Fremont, Ohio (US)
(72) Inventeur: Cechin, Pierre, F-62250 Boulogne sur Mer (FR); Lerouge, Jean-Claude, F-62520 Le Touquet (FR)
(74) Mandataire: Armengaud Ainé, Alain

(56) Documents cités:
- EP-A- 0 213 900
- BE-A- 902 189
- US-A- 4 366 255
- US-A- 4 915 740
- US-A- 5 087 277

## Description

La présente invention est relative à une composition de béton réfractaire alumineux, destinée notamment à des applications sidérurgiques qui requièrent une excellente tenue à l'abrasion chimique et mécanique due aux métaux et aux laitiers en fusion, elles demandent aussi une résistance accrue à la compression.

En général, les bétons réfractaires alumineux existants comprennent des fibrilles métalliques dans une proportion moyenne de 16% en volume et qui sont destinées à armer le béton, elles lui accordent ainsi une amélioration de ses caractéristiques de résistance à la flexion et aux chocs.

On connaît le brevet US-4 366 255 qui vise une composition de béton réfractaire pour l'obtention de pièces réfractaires renforcées, élaborées à partir de l'infiltration d'une composition liquide réfractaire au travers d'un lit de fibres métalliques.

La présente composition, objet de la présente invention, se propose d'augmenter la masse volumique de ces bétons, et par conséquent de diminuer l'écart existant par l'adjonction d'un lest sous forme de particules ou de débouchures métalliques, ou de l'abaisser par l'incorporation d'un produit moussant qui confère au béton armé des propriétés d'isolation thermique et phonique importantes.

L'invention a donc pour objet une composition de béton réfractaire telle que définie dans la revendication 1.

Des compositions préférées sont définies dans les revendications 2 - 5.

Le procédé d'élaboration de la composition de béton réfractaire est défini dans les revendications 6 et 7.

L'érosion et l'abrasion chimiques et mécaniques sont des phénomènes non négligeables et inévitables pour les applications visées, conséquemment on substitue, en combinaison, en totalité ou partie, et ce dans une proportion de 8 à 20% en volume de barbotine alumineuse par des agrégats choisis parmi l'olivine, la magnésie et l'hématite.

Les agents de fluidité, retardateurs ou accélérateurs, peuvent également agir sur la prise du mélange. Ils sont notamment choisis pour les accélérateurs parmi les composés alcalins, les hydroxydes de potassium et de calcium, les carbonates et les silicates de sodium et de potassium, les sulfates de sodium et de calcium (compris entre 0,5 et 1% massique), les plâtres de Paris, les compositions d'acide sulfurique dilué, des sels de lithium, les lignosulfonates, les ciments de "Portland", les triéthanols d'amine.

Les retardateurs de mélange sont notamment choisis parmi des composés acides, des acides acétiques et muriatiques, les chlorures de calcium, de baryum, de magnésium , de potassium, de sodium, les hydrates de chlorure d'aluminium, les trétraborates de sodium, les acides boriques, les sulfates de calcium et de sodium, les hydroxydes de magnésium et de baryum, les sels de plomb, les phosphates, les alcools isopropyliques, les glycols, la glycérine, l'amidon, la farine, les sucres, la caséine, les produits à base de cellulose et les sulfonates, les sels d'acide hydroxycarboxyliques.

La composition finale de cette barbotine comprend en suspension une pluralité d'agents de fluidité présents sous forme de poudre et dans des faibles quantités, on y mêle ainsi de l'aluminium, du molybdène, du zircone, du nitrure de bore, du carbure de silicium, qui évitent le collage des métaux en fusion et une pénétration dans le réfractaire, améliorent leur fluidité et réduisent considérablement l'abrasion.

Selon un autre mode de réalisation, cette composition finale de barbotine comprend également un agent de fluidité dont les propriétés permettent de fluidifier le mélange ou de posséder des caractéristiques réductrices sur le solvant qui est l'eau. Ainsi, parmi ces agents réducteurs on choisit notamment le gluconate de sodium ou le citrate de sodium ; tandis que les agents plastifiants sont choisis parmi la bentonite (entre 2 et 3% en masse), l'argile réfractaire (entre 5 et 15% en masse) et finalement un agent disperseur de gaz.

L'élaboration des produits finis s'établit à partir d'un coulage d'une composition très liquide dont les composants sont définis dans la revendication 6, appelée barbotine ou "slurry", dans un moule approprié à la forme terminale voulue, dans lequel des fibrilles seront disposées, en lits, à plat dans tout le moule.

Grâce à son coefficient de fluidité, cette barbotine se glissera dans les interstices tout en évitant des mouvements (ou changement de positions) desdites fibrilles. Il y a donc un effet de pénétration bien spécifique avec fibrillage directionnel caractérisé.

Après cuisson, les produits finis disposent d'une masse volumique importante.

Si l'on veut un matériau réfractaire armé dans lequel on ne favorise plus l'effet de lest et de compacité, mais au contraire un produit disposant d'une masse volumique faible, en vue d'applications d'isolation thermique et phonique, le fort taux de vide nécessaire dans la barbotine est obtenu par adjonction de dérivés moussants provenant de la technologie des savons et dans des proportions compris es dans une plage de 0,05% à 5% en volume en compagnie des autres constituants de la barbotine.

La lecture de la description qui précède montre que l'invention apporte une nouveauté dans l'emploi d'un béton armé réfractaire ainsi constitué ; ses applications sont aussi bien dans le domaine de la sidérurgie ou de la fonderie, notamment pour des becs de coulée des fonds de poches, que pour des garnissages intérieurs de cheminées ou de conduits de fumée, des mélangeurs, couronnements de poche.

On peut même utiliser des fibrilles, en alliage amagnétique, pour le garnissage de fond de fours à induction à creus et, ainsi que les tables de chargement, là où l'abrasion est particulièrement intense.

## Revendications

1. Composition de béton réfractaire pour applications sidérurgiques, notamment pour la fusion de métaux ferreux ou non-ferreux, comportant à titre principal des agrégats alumineux, ainsi que des fibrilles métalliques, un solvant constitué par de l'eau, des agents de fluidité évitant le collage des métaux en fusion et une pénétration dans le réfractaire, retardateurs ou accélérateurs de prise, un agent plastifiant et un additif de correction de masse volumique, caractérisée en ce qu'elle comporte des agrégats de substitution pour une fraction des agrégats alumineux choisis parmi l'olivine, la magnésie et l'hématite, dans une plage allant de 8 à 20% en volume de barbotine (la barbotine étant definie par tous les éléments de la composition, à l'exception des fibrilles métalliques), l'additif de correction de masse volumique étant constitué par des débouchures métalliques, dans le sens d'une augmentation de la masse volumique, ou par un produit moussant issu de la technologie des savons, dans une proportion de 0,05 à 5% en volume de barbotine, dans le sens d'une diminution de cette masse volumique.

2. Composition de béton réfractaire selon la revendication 1, caractérisée en ce qu'on remplace les fibrilles métalliques magnétiques par des fibrilles amagnétiques pour des applications de garnissage de fours à induction.

3. Composition de béton réfractaire selon l'une quelconque des revendications précédentes, caractérisée en ce que l'agent de fluidité comporte des poudres choisies parmi l'aluminium, le molybdène, le zircone, le nitrure de bore, le carbure de silicium, afin d'éviter le collage des métaux en fusion.

4. Composition de béton réfractaire selon l'une quelconque des revendications précédentes, caractérisée en ce qu'elle comporte un agent réducteur du solvant choisi parmi le gluconate ou le citrate de sodium.

5. Composition de béton réfractaire selon l'une quelconque des revendications précédentes, caractérisée en ce que l'agent plastifiant est choisi parmi la bentonite (entre 2 et 3% en masse de barbotine) ou une argile réfractaire (entre 5 et 15% en masse de barbotine).

6. Procédé d'élaboration d'une composition de béton réfractaire selon l'une quelconque des revendications 1 à 5, caractérisé en ce que l'on procède à l'élaboration des produits finis par un coulage d'une composition très liquide appelée barbotine, cette dernière renfermant des agrégats alumineux, un solvant constitué par de l'eau, des agents de fluidité évitant le collage des métaux en fusion et une pénétration dans le réfractaire, retardateurs ou accélérateurs de prise, un agent plastifiant, des agrégats de substitution pour une fraction des agrégats alumineux, choisis parmi l'olivine, la magnésie et l'hématite, dans une plage allant de 8 à 20% en volume de barbotine et un additif de correction de masse volumique étant constitué par des débouchures métalliques, dans le sens d'une augmentation de la masse volumique, ou par un produit moussant issu de la technologie des savons, dans une proportion de 0,05 à 5% en volume de barbotine, dans le sens d'une diminution de cette masse volumique, dans un moule approprié à la forme terminale souhaitée, dans lequel des fibrilles métalliques sont disposées en lits et à plat dans tout le moule.

7. Procédé pour l'élaboration d'une composition de béton réfractaire selon la revendication 6, caractérisé en ce que la barbotine est coulée dans les interstices entre les fibrilles sans en modifier leurs positions respectives, pour maintenir un fibrillage directionnel.

## Claims

1. Refractory concrete composition for iron- and steel-making applications, notably for the fusion of ferrous or non-ferrous metals, containing principally aluminous aggregates, as well as metallic fibrils, a solvent consisting of water, fluidity agents preventing adhesion of the molten metals and penetration into the refractory, solidification retarders or accelerators, a plasticiser and a density correction additive, characterised in that it includes substitute aggregates for a proportion of the aluminous aggregates chosen from amongst olivine, magnesia and hematite, in a range from 8% to 20% by volume of slip (the slip being defined by all the elements of the composition, except for the metallic fibrils), the density correction additive consisting of metallic cuttings, for an increase in the density, or a foaming agent from soap technology, in a proportion of 0.05% to 5% by volume of slip, for a reduction in the said density.

2. Refractory concrete composition according to Claim 1, characterised in that the magnet metallic fibrils are replaced with non-magnetic fibrils for applications for lining induction furnaces.

3. Refractory concrete composition according to either one of the preceding claims, characterised in that the fluidity agent contains powders chosen from amongst aluminium, molybdenum, zirconium, boron nitride or silicon carbide, in order to prevent adhesion of the molten metals.

4. Refractory concrete composition according to any one of the preceding claims, characterised in that it contains a reducing agent for the solvent chosen from amongst sodium gluconate or citrate.

5. Refractory concrete composition according to any one of the preceding claims, characterised in that the plasticiser is chosen from amongst bentonite (between 2% and 3% by weight of slip) or a refractory clay (between 5% and 15% by weight of slip).

6. Method for producing a refractory concrete composition according to any one of Claims 1 to 5, characterised in that the finished products are produced by casting a highly liquid composition referred to as slip, the latter containing aluminous aggregates, a solvent consisting of water, fluidity agents preventing the adhesion of the molten metals and penetration into the refractory, solidification retarders or accelerators, a plasticiser, substitute aggregates for a proportion of the aluminous aggregates, chosen from amongst olivine, magnesia and hematite, in a range from 8% to 20% by volume of slip, and a density correction additive consisting of metallic cuttings, for an increase in the density, or a foaming agent from soap technology, in a proportion of 0.05% to 5% by volume of slip, for a reduction in the said density, in a mould appropriate to the required end shape, in which the metallic fibrils are disposed in layers and flat throughout the mould.

7. Method for producing a refractory concrete composition according to Claim 6, characterised in that the slip is poured into the interstices between the fibrils without changing the respective positions thereof, in order to maintain a directional lay of the fibrils.

## Patentansprüche

1. Feuerfeste Betonzusammensetzung für Eisenhüttenanwendungen, insbesondere zum Schmelzen von eisenhaltigen oder nichteisenhaltigen Metallen, der als Hauptbestandteil aluminiumoxidhaltige Stoffe aufweist, ebenso wie Metallfasern, Wasser als Lösungsmittel, Fluidisierungsmittel, die das Verklumpen der Metallschmelze und ein Eindringen in den feuerfesten Stoff verhindern, Reaktionsverzögerer oder -beschleuniger zur Verfestigung, einen Weichmacher und ein Additiv zum Ausgleich der Dichte,
dadurch gekennzeichnet,
daß die Zusammensetzung Zuschlagstoffe enthält, die einen Teil der aluminiumoxidhaltigen Zuschlagstoffe ersetzen, wie Olivin, Magnesiumoxid und Hämatit in einem Verhältnis im Bereich von 8 bis 20 Vol.-% des Betonschlamms (wobei dieser 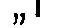 Betonschlamm" mit Ausnahme der Metallfasern aus allen Bestandteilen der Zusammensetzung besteht), und daß das Additiv zur Korrektur der Dichte aus metallischen Spanabfällen besteht, um die Dichte zu erhöhen, oder ein aus der Seifentechnologie stammendes schäumendes Produkt in einem Verhältnis im Bereich von 0,05 bis 5 Vol.-% des Betonschlamms ist, um diese Dichte herabzusetzen.

2. Feuerfeste Betonzusammensetzung nach Anspruch 1,
dadurch gekennzeichnet,
daß für die Verwendung zur Auskleidung von Induktionsöfen die magnetischen Metallfasern durch nicht-magnetische Fasern ersetzt sind.

3. Feuerfeste Betonzusammensetzung nach einem der vorhergehenden Ansprüche,
dadurch gekennzeichnet,
daß das Fluidisierungsmittel Aluminium-, Molibdän-, Zirkon-, Bornitrid- und Siliciumcarbidpulver enthält, um das Verklumpen der Metallschmelze zu verhindern.

4. Feuerfeste Betonzusammensetzung nach einem der vorhergehenden Ansprüche,
dadurch gekennzeichnet,
daß die Zusammensetzung ein Reduktionsmittel, wie Natriumglukonat oder Natriumcitrat, enthält.

5. Feuerfeste Betonzusammensetzung nach einem der vorhergehenden Ansprüche,
dadurch gekennzeichnet,
daß der Weichmacher entweder Bentonit (zwischen 2 und 3 Masse-% des Betonschlamms) oder feuerfester Ton (zwischen 5 und 15 Masse-% des Betonschlamms) ist.

6. Verfahren zur Herstellung eines feuerfesten Betons nach einem der Ansprüche 1 bis 5,
dadurch gekennzeichnet,
daß man zur Herstellung der fertigen Produkte eine sehr flüssige Zusammensetzung, sogenannten Betonschlamm, in eine der gewünschten endgültigen Form entsprechende Gießform vergießt, wobei in der gesamten Form Metallfasern schichtförmig und flach angeordnet sind, und wobei der Betonschlamm aluminiumoxidhaltige Zuschlagstoffe, Wasser als Lösungsmittel, Fluidisierungsmittel, die das Verklumpen der Metallschmelze und ein Eindringen in den feuerfesten Stoff verhindern, Reaktionsverzögerer oder -beschleuniger zur Verfestigung, einen Weichmacher, Zuschlagstoffe, die einen Teil der aluminiumoxidhaltigen Zuschlagstoffe ersetzen, wie Olivin, Magnesiumoxid und Hämatit in einem Verhältnis im bereich von 8 bis 20 Vol.-% des Betonschlamms, und ein Additiv zum Ausgleich der Dichte enthält, das entweder aus metallischen Spanabfällen besteht, um die Dichte zu erhöhen, oder ein aus der Seifentechnologie stammendes schäumendes Produkt in einem Verhältnis im Bereich von 0,05 bis 5 Vol.-% des Betonschlamms ist, um diese Dichte herabzusetzen.

7. Verfahren zur Herstellung eines feuerfesten Betons nach Anspruch 6,
dadurch gekennzeichnet,
daß der Betonschlamm zwischen die Fasern gegossen wird, ohne deren jeweilige Lage zu verändern, um so eine gerichtete Faseranordnung aufrechtzuerhalten.
